# EUROPÄISCHE PATENTSCHRIFT

(11) **EP 2 788 785 B1**
(45) Veröffentlichungstag und Bekanntmachung des Hinweises auf die Patenterteilung: **10.10.2018**
(21) Anmeldenummer: 12798630.5
(22) Anmeldetag: 15.11.2012
(51) Int. Cl.: G01S 7/00, G01S 15/87, G01S 15/93, H04L 29/08, H04L 29/06

(54) **SENSORSYSTEM ZUM BETREIBEN EINES SENSORSYSTEMS**
SENSOR SYSTEM FOR OPERATING A SENSOR SYSTEM
SYSTÈME DE CAPTEURS SERVANT À FAIRE FONCTIONNER UN SYSTÈME DE CAPTEURS

(30) Priorität: 06.12.2011 DE 102011087842
(43) Veröffentlichungstag der Anmeldung: 15.10.2014
(73) Patentinhaber: Robert Bosch GmbH, 70442 Stuttgart (DE)
(72) Erfinder: BOECK, Heiko, 71277 Rutesheim (DE); HELMLE, Michael, 73732 Esslingen (DE)
(86) Internationale Anmeldenummer: PCT/EP2012/072726
(87) Internationale Veröffentlichungsnummer: WO 2013/083381

(56) Entgegenhaltungen:
- DE-A1-102008 045 190
- US-A- 5 295 119

## Beschreibung

### Stand der Technik

Die vorliegende Erfindung betrifft ein Sensorsystem sowie einen Sensor für ein solches Sensorsystem, mit welchem beispielsweise für ein Fahrerassistenzsystem Umgebungsinformationen aufgenommen und zur zentralen Verarbeitung im Assistenzsystem über einen Bus weitergeleitet werden können. Ein möglicher Anwendungsbereich für ein erfindungsgemäßes Sensorsystem ist ein im Stand der Technik bekanntes Parkassistenzsystem, welches Sensoren umfasst, die Ultraschall aussenden und den durch Objekte im Fahrzeugumfeld reflektierten Ultraschall empfangen können. Aktuelle Systeme bestehen dabei aus bis zu 6 Sensoren jeweils am vorderen und am hinteren Stoßfänger eines Fahrzeugs. Im Stand der Technik werden die Sensoren über jeweils eine separate Datenleitung an das Steuergerät des Parksystems angeschlossen. Erkennt ein Sensor ein Hindernis, so wird diese Information zum Erkennungszeitpunkt in Echtzeit über die Datenleitung an das Steuergerät gesendet. Die Berechnung des Abstands zwischen Sensor und Hindernis erfolgt dann im Steuergerät des Parksystems durch Ausmessen der Zeitdifferenz zwischen dem Aussenden des Ultraschallpulses und Empfangen des Ultraschallechosignals. Die Anbindung aller Sensoren durch einzelne Leitungen am Steuergerät des Parksystems verursacht Kosten, Gewicht und Bauraumbeanspruchung, was eine alternative Lösung erstrebenswert erscheinen lässt. Nach dem Standard des PSI5-Protokolls senden alle Teilnehmer ihre Daten in einem jeweiligen fest vordefinierten Zeitschlitz. Dieser wird durch ein festes Offset auf einen Synchronisationspuls bestimmt, welcher durch den Master des Bussystems ausgesendet wird. Der Synchronisationspuls weist standardgemäß eine vordefinierte feste Breite auf. Um dabei eine möglichst hohe Messauflösung bzw. "Performance" zu erzielen, senden gemäß dem Stand der Technik mehrere Sensoren gleichzeitig Ultraschallpulse aus, was zu einer relativ hohen Gesamtstromaufnahme des Parksystems führt. Die relativ hohe Gesamtstromaufnahme führt wiederum dazu, dass die Infrastruktur entsprechend robust ausgelegt werden muss. Bekanntermaßen führt dies zu einem erhöhten Materialaufwand, einer erhöhten Systemmasse sowie einer ebenfalls unerwünschten Kostenmehrung.

Überdies wäre es wünschenswert, einzelne Sensoren, deren Messsignale beispielsweise aktuell von erhöhter Wichtigkeit sind, gezielt ansprechen und/oder zu einer Datenerfassung und -übermittlung mit erhöhter Wiederholrate ansteuern zu können. Insbesondere bei sogenannten "intelligenten Sensoren", welche also eine eigene Auswertelogik zur Auswertung von Sensorsignalen umfassen und ein dem Auswertesignal entsprechendes, insbesondere digitales, Bussignal über den Bus senden, besteht zudem die Notwendigkeit, eine präzise Zeitmessung innerhalb des Sensors darzustellen.

DE 10 2008 045 190 A1 offenbart ein Verfahren zur Steuerung von Sensoren zur Umfeldsensorik, welche über ein Bussystem miteinander verbunden sind. Die Sensoren umfassen jeweils einen eigenständigen Zeitmesser, mittels welchem Trigger-Impulse zur Triggerung eines Messablaufs erzeugt werden. Zur Synchronisation der Zeitmesser wird vorgeschlagen, eine Datenübertragung der Systemzeit während der Initialisierungsphase durchzuführen.

Quarz-Oszillatoren ermöglichen eine ausreichend genaue Messung einer Echolaufzeit, beispielsweise eines Ultraschallsensors. Diese sind jedoch erheblich teurer als RC-Oszillatoren, welche jedoch zwar für eine Ermittlung eines Zeitpunktes, in welchem der Sensor sein Signal über den Bus senden soll, ausreicht, jedoch für eine Messung einer Echolaufzeit nicht ohne Weiteres in Frage kommen. Es besteht daher im Stand der Technik der Bedarf nach einer für die Messung einer Echolaufzeit hinreichend genauen, kostengünstigen Lösung zur Zeitmessung in Sensoren.

### Offenbarung der Erfindung

Der im Stand der Technik bekannte Bedarf wird erfindungsgemäß durch ein Sensorsystem mit den Merkmalen gemäß Anspruch 1 sowie einem Sensor mit den Merkmalen gemäß Anspruch 9 gelöst. Erfindungsgemäß umfasst ein Sensorsystem einen Bus. Unter einem Bus wird im Allgemeinen ein System zur Datenübertragung zwischen mehreren Teilnehmern (Sensoren) über einen gemeinsamen Übertragungsweg verstanden, bei dem die Teilnehmer nicht an der Datenübertragung zwischen anderen Teilnehmern beteiligt sind. Derartige Bussysteme sind aus dem automobilen Serieneinsatz im Stand der Technik bekannt. Weiter umfasst ein erfindungsgemäßes Sensorsystem einen ersten Sensor. Unter einem "Sensor" ist im Rahmen der Erfindung jedes Element zu verstehen, das zur Erfassung einer physikalischen Größe geeignet ist. Dies schließt nicht aus, dass ein Sensor auch aktiv eine physikalische Größe beeinflussen kann, insbesondere um die Erfassung der Messgröße zu ermöglichen oder zu erleichtern. Beispielsweise sendet ein Ultraschallsensor aktiv ein Signal aus und ermittelt aus dem empfangenen Echo die eigentliche zu messende Größe, nämlich den Abstand zu einem Objekt. Ein erfindungsgemäßer "Sensor" kann somit auch eine Aktuatorik bzw. einen Aktuator umfassen. Erfindungsgemäß umfasst ein erster Sensor Zeitmessmittel, bzw. eine Zeitmesseinrichtung, mit welchen innerhalb des Sensors eine Zeitmessung dargestellt werden kann.

Erfindungsgemäß kommen als Zeitmessmittel RC-Glieder zum Einsatz. Der Sensor des erfindungsgemäßen Systems ist über den Bus mit weiteren Sensoren verbunden und eingerichtet, über den Bus Signale zu empfangen. Um mit dem Zeitmessmittel (selbstverständlich könnten ebenso mehrere "Zeitmessmittel" oder "Zeitmesseinrichtungen" vorgesehen sein) eine möglichst exakte Zeitmessung innerhalb des Sensors zu ermöglichen, ist der Sensor eingerichtet, über den Bus einen Steuerpuls für das Messen eines Zeitintervalls zu erhalten. Über den Steuerpuls ist der Sensor im Stande, die Zeitmessung mittels des eigenen Zeitmessmittels quasi zu "kalibrieren". Selbstverständlich kann der Steuerpuls alle möglichen geeigneten Charakteristika aufweisen, welche zum Transportieren eines exakten Zeitinformationssignals an den Sensor geeignet sind. Beispielsweise kann die Länge eines Steuerpulses (steigende und fallende Flanke) bzw. der Abstand zwischen zwei Steuerpulsen (z.B. jeweils steigende bzw. jeweils fallende Flanke) die vordefinierte Zeitdauer an den Sensor senden und dieser im Ansprechen auf ein Empfangen des Bussignals ermitteln, wie sich das eigene Zeitmessmittel über der Zeit verhält. Somit kann selbst bei einer Verwendung von RC-Gliedern als relativ ungenauen Zeitmessmitteln zumindest in einem engen zeitlichen Nachgang eines Empfangs des Steuerpulses eine vergleichsweise exakte Zeitmessung durch das Zeitmessmittel im Sensor erfolgen.

Die Unteransprüche zeigen bevorzugte Weiterbildungen der Erfindung.

Im Ansprechen auf den Empfang des Steuerpulses kann der Sensor einen Korrekturfaktor für die Zeitmessmittel ermitteln. Über den Korrekturfaktor kann dabei das aktuelle Messverhalten des Zeitmessmittels berücksichtigt und somit eine exakte Zeitmessung durch ein RC-Glied dargestellt werden.

Weiter kann der Sensor Speichermittel umfassen und eingerichtet sein, eine über den Bus gesendete Dateneinheit zum Ausführen vordefinierter Aktionen in den Speichermitteln zu speichern. Eine solche Dateneinheit kann beispielsweise eine Tabelle bzw. eine Matrix sein, welche für die im Verbund vorhandenen Sensoren individuelle Befehlssätze enthält, denen wiederum eindeutige Indices zugeordnet sind. Über die Indices können die Befehlssätze durch ein Bussignal angesteuert werden, so dass der jeweilige Sensor eine jeweilige Aktion (z.B. Senden und/oder Empfangen von Signalen) durchführt. Hierbei kann das Bussignal, welches den Index eines jeweiligen Sensorbefehlssatzes übermittelt, den Steuerpuls für das Messen des Zeitintervalls im Sensor umfassen. Beispielsweise kann das Bussignal aus einem Steuerpuls bestehen, dessen Länge einerseits den Index einer jeweiligen Aktion angibt und, da seine Länge quantisiert ist, seine steigende und seine fallende Flanke als Steuerpuls für das Messen des Zeitintervalls verwendet werden. Alternativ oder zusätzlich kann das Bussignal aus zwei Steuerpulsen bestehen, wobei die Länge des ersten Steuerpulses oder beider Steuerpulse oder des zweiten Steuerpulses den Aktionsindex angibt und der Abstand der steigenden oder der fallenden Flanken beider Pulse für das Messen des Zeitintervalls zum Kalibrieren des Zeitmessmittels verwendet wird.

Bevorzugt kann die Dateneinheit zum Ausführen vordefinierter Aktionen Informationen über einen Zeitpunkt der Ausführung der vordefinierten Aktionen relativ zu dem Empfangszeitpunkt des Steuerpulses enthalten. Beispielsweise können hierzu die Sensoren des Systems anhand eines Sensorindices durchnummeriert sein, wobei durch den Sensorindex auch ein Zeitrang zum Senden von Nachrichten über den Bus durch den Sensor vorgegeben sein kann. Beispielsweise kann der Sensor mit dem Index 1 mit einem Offset von 0 µs, der Sensor mit dem Index 2 mit einem Offset von 100 µs, der Sensor mit dem Index 3 mit einem Offset von 200 µs usw.... seine Nachricht in Bezug auf einen vordefinierten Zeitpunkt über den Bus senden. Die Nachricht kann dabei beispielsweise einen Datenwert (z.B. minimaler Abstand Sensor-Fahrzeugumgebung), welchen der Sensor erfasst hat, und insbesondere auch eine Sensor-Kennung, umfassen.

Vorteilhaft kann der Sensor hierzu auch eine Auswerteeinheit umfassen, welche eingerichtet ist, Messsignale, insbesondere in digitaler Form, über den Bus zu senden. Hierdurch kann vorteilhafterweise der Datenverkehr auf dem Bus stark verringert werden, da statt eines Analogsignals bzw. einer Datenfolge repräsentierend ein Messsignal lediglich das Auswerteergebnis des entsprechenden Messsignals über den Bus gesendet wird.

Weiter vorteilhaft kann der Bus eingerichtet sein, sowohl die Spannungsversorgung der Sensoren als auch die Datenübertragung im Verkehr mit den Sensoren über dieselbe Leitung durchzuführen. Insbesondere vorteilhaft kann das System konform mit dem PSI5-Standard sein, welcher sich in der Automobilindustrie für eine Vielzahl von Anwendungen anbietet.

Weiter kann das System ein Steuergerät umfassen, welches eingerichtet ist, Daten über die in den Speichermitteln des Sensors gespeicherten Aktionen bereitzuhalten. Dies kann insbesondere eine Dateneinheit sein, wie sie zum Ausführen vordefinierter Aktionen in den Speichermitteln der Sensoren vorgehalten wird. Hierdurch kann das Steuergerät gezielt bestimmte Sensoren zum Durchführen vordefinierter Aktionen ansteuern, indem es einen Aktionsindex über den Bus sendet, im Ansprechen auf welchen der gewünschte Sensor bzw. die gewünschten Sensoren die zu diesem Index hinterlegte Aktion bzw. hinterlegten Aktionen durchführen und anschließend Messwerte über den Bus an das Steuergerät zurücksenden. Weiter kann das Steuergerät eingerichtet sein, die Dateneinheit an die Speichermittel des Sensors zu senden, um sie (beispielsweise zu Beginn eines Lebenszyklus' des Fahrzeugs) mit einem Befehlssatz zu beschreiben. Alternativ oder zusätzlich kann ein solches Rundsenden der Dateneinheit an die Speichermittel der Sensoren zyklisch erfolgen. Weiter kann das Steuergerät eingerichtet sein, vorbestimmte Bus-Signale über den Bus zu senden. Diese können sowohl den Steuerpuls für das Messen eines Zeitintervalls als auch den Index (z.B. Steuerpuls-Länge) zum Auswählen jeweiliger Sensoraktionen umfassen.

Beispielsweise können die Sensoren Entfernungssensoren sein, wie sie zum Zwecke der Kollisionsüberwachung eines Fahrzeugs verwendet werden. Indem die Sensoren zu einem ersten Zeitpunkt beispielsweise ein Ultraschallsignal aussenden und zu einem zweiten Zeitpunkt auf "Empfang" umschalten, um das Echo aufzunehmen, können sie aus dem Zeitintervall zwischen dem Sende- und dem Empfangszeitpunkt auf die Entfernung zum reflektierenden Objekt schließen. Hierzu ist eine besonders exakte Zeitmessung erforderlich, wie sie über RC-Glieder außerhalb eines erfindungsgemäßen Systems nicht möglich ist. Erst im Zusammenspiel mit dem beispielsweise vom Steuergerät des Busses stammenden Steuerpuls lässt sich auch durch RC-Glieder als Zeitmessmittel eine hinreichend genaue Zeitmessung darstellen.

Gemäß einem weiteren Aspekt der vorliegenden Erfindung wird ein Sensor vorgeschlagen, welcher Speichermittel, Messmittel und Anschlüsse für die Integration in einen Bus umfasst. Dieser Sensor ist eingerichtet, in einem Sensorsystem, wie es oben ausführlich beschrieben worden ist, eingesetzt zu werden. Insbesondere kann der Sensor hierzu auch eine Auswerteeinheit umfassen.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine Übersicht über ein erfindungsgemäßes Sensorsystem;
- Figur 2: eine Detailansicht eines erfindungsgemäßen Sensors;
- Figur 3: eine Aktionsliste, wie sie als Dateneinheit in einem Ausführungsbeispiel des erfindungsgemäßen Systems verwendet wird;
- Figur 4: eine Übersicht zum Mapping von Synchronisationspulsen auf einem jeweiligen Aktionsindex für ein Ausführungsbeispiel des erfindungsgemäßen Sensorsystems;
- Figur 5: ein Zeitdiagramm, visualisierend die zeitliche Abfolge zwischen einem Synchronisations-Puls und Sensoraktionen; und
- Figur 6: ein Zeitdiagramm, visualisierend die zeitliche Folge eines Synchronisations-Pulses, von den Sensoren ausgeführter Aktionen sowie durch Sensoren gesendete Nachrichten in jeweiligen Zeitschlitzen.

### Ausführungsformen der Erfindung

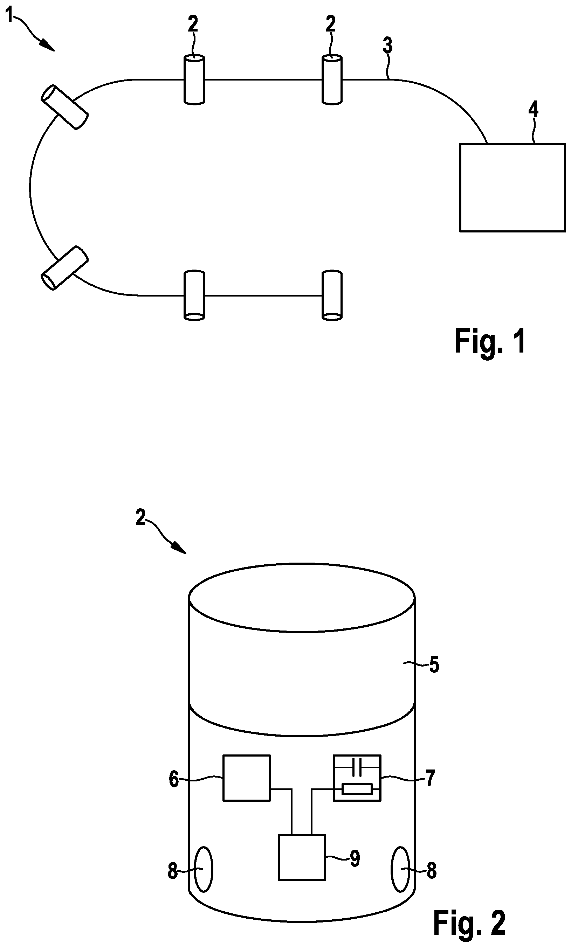

Figur 1 zeigt ein Sensorsystem 1, umfassend einen Bus 3, an welchem Sensoren 2 und ein Steuergerät 4 angeschlossen sind. Der Bus 3 weist eine Linientopologie auf. Die sechs dargestellten Sensoren 2 könnten beispielsweise an einem vorderen oder einem hinteren Stoßfänger eines Kraftfahrzeugs als Sensoren zur Parkdistanzüberwachung angeordnet sein.

Figur 2 zeigt eine Detailansicht eines Sensors 2, der eine Sensorik 5 im Sensorkopf umfasst. Weiter sind im Sensor-Korpus Speichermittel 6 sowie ein Zeitmessmittel 7 mit einer Auswerteeinheit 9 verbunden. Im Zeitmessmittel 7 sind ein Widerstand und ein Kondensator als RC-Glied angedeutet. Weiter umfasst der Sensor 2 Busanschlüsse 8, über welche der Sensor in einen Bus 3 integriert werden kann. Über die Busanschlüsse kann der Sensor 2 auch mit elektrischer Energie versorgt werden. Diese kann durch (nicht dargestellte) Energiespeichermittel kurzfristig gespeichert werden, um den Sensor im Falle einer gepulsten Energieversorgung dauerhaft mit elektrischer Energie versorgen zu können.

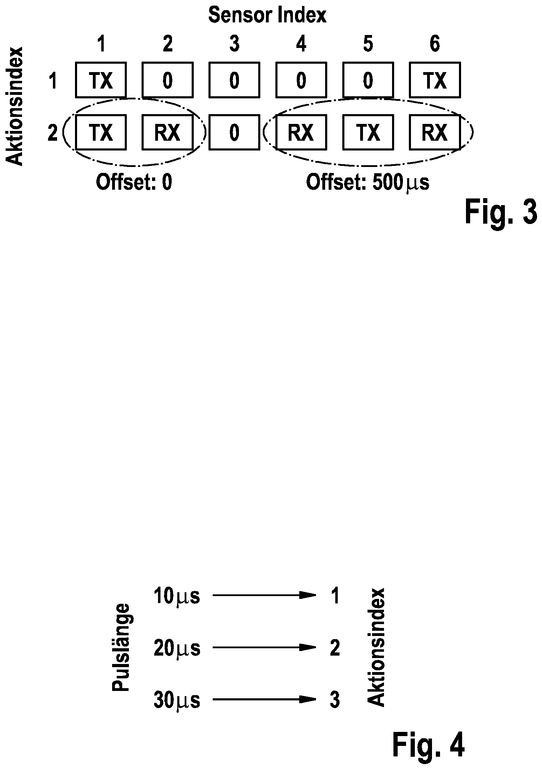

Figur 3 zeigt eine Aktionsliste, in welcher Aktionsindizes 1 und 2 sowie Sensorindizes 1 bis 6 matrixförmig dargestellt sind. In den Feldern der Matrix sind Aktionen, welche der Sensor im Ansprechen auf den Empfang eines entsprechenden Aktionsindizes durchführen soll, dargestellt. Hierbei bedeutet TX, dass der Sensor sendet und empfängt, RX, dass der Sensor empfängt, und "0", dass der Sensor keine Aktion bei Empfangen des jeweiligen Aktionsindizes ausführt. Der Sensorindex kann beispielsweise mit der Reihenfolge der Sensoren am Bus übereinstimmen. Im Beispiel würden im Ansprechen auf den Empfang des Aktionsindex 1 der erste sowie der sechste Sensor senden. Die übrigen Sensoren (Sensoren 2 bis 5) würden keine Aktion durchführen. Im Ansprechen auf ein Empfangen des Aktionsindexes 2 haben die Sensoren 1 und 5 einen Sende- und Empfangsvorgang durchzuführen, während die Sensoren 2, 4 und 6 nur auf "Empfang" schalten. Sensor 3 bleibt auch bei Empfang des Aktionsindex 2 ohne Funktion. Bei der Verwendung der dargestellten Aktionsliste kann davon ausgegangen werden, dass nur solche Sensoren auch Daten über den Bus senden, die eine Aktion auszuführen hatten. Auf diese Weise kann jeder Sensor für sich den Zeitschlitz für das Senden der Daten bestimmen. Wird hierfür z.B. der Sensorindex als Priorität interpretiert, kann im Ansprechen auf ein Empfangen des Aktionsindexes 1 der Sensor 6 direkt im Anschluss an die Botschaft, welche der Sensor 1 über den Bus sendet, seine Nachricht im zweiten Zeitschlitz über den Bus senden, da die Sensoren 2 bis 5 keine Aktion durchzuführen haben. Da dem Steuergerät dieselbe Aktionsliste zur Verfügung steht, kann es die empfangenen Nachrichten auch bei solch dynamisch verwalteter Zeitfolge den jeweiligen Sensoren eindeutig zuordnen. Selbstverständlich können Zeitschlitze zum Senden von Busnachrichten 1 bis 6 auch fest den entsprechenden Sensorindizes 1 bis 6 zugeordnet werden. Alternativ kann ein Sensor gemeinsam mit den zu sendenden Daten auch eine Kennung an das Steuergerät senden, im Ansprechen auf welche eine Zuordnung der empfangenen Daten zum jeweiligen Sensor innerhalb des Steuergerätes erfolgt. Hierbei ist jedoch der zusätzliche Bedarf an Übertragungsbandbreite zu berücksichtigen. Eine gemäß der vorliegenden Erfindung bevorzugte Ausführungsform schlägt vor, zu einem jeweiligen Zeitpunkt immer nur einen Sensor senden zu lassen, wodurch die Gesamtstromaufnahme des Sensorsystems reduziert werden kann und das Bussystem weniger aufwändig gestaltet werden muss. Hierzu zeigt die Aktionsliste der Figur 3, dass die Sensoren 1 und 2 bzw. die Sensoren 4 bis 6 in zwei Offset-Gruppen eingeteilt sind. Während die Sensoren 1 und 2 ihre Aktion mit einem Offset von 0 µs durchführen (Sensor 1 sendet und empfängt, während Sensor 2 nur empfängt), ist für den Sensor 5 vorgesehen, dass dieser mit einem Offset von 500 µs sendet und empfängt und die Sensoren 4 und 6 zeitgleich empfangen. Die Information über den Offset kann einerseits innerhalb der Sende- oder Empfangsaktion selbst hinterlegt werden, alternativ können jedoch auch beispielsweise die in Figur 3 mit dem Aktionsindex 2 verknüpften Aktionen der Sensoren 4 bis 6 mit einem alternativen Aktionsindex belegt werden und über diesen zu einem anderen Zeipunkt separat vom Steuergerät des Busses angesteuert werden.

Figur 4 zeigt eine mögliche Zuordnung einer Steuerpulslänge, wie sie über den Bus gesendet werden könnte, zu einem jeweiligen Aktionsindex, wie er in der Aktionsliste hinterlegt ist. Beispielsweise kann die Pulslänge von 10 µs dem Aktionsindex 1 entsprechen, eine Pulslänge von 20 µs einem Aktionsindex 2 entsprechen und eine Pulslänge von 30 µs dem Aktionsindex 3 entsprechen. Selbstverständlich könnte die als Pulslänge bezeichnete Zeitdauer auch z.B. den Zeitraum zwischen den steigenden Flanken zweier aufeinander folgend gesendeter Impulse darstellen.

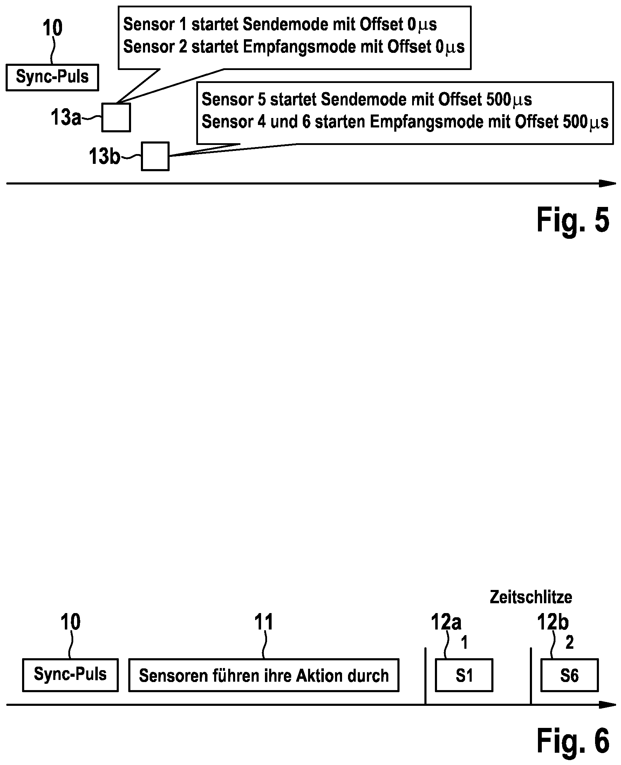

Figur 5 zeigt den zeitlichen Zusammenhang zwischen dem Senden eines Synchronisations-Pulses 10 als Steuerpuls und den in der Aktionsliste der Figur 3 hinterlegten Aktionen der Sensoren 1, 2 und 4 bis 6. Nach Erhalt des Synchronisations-Pulses 10 sendet der Sensor 1 im Sensoraktionszeitraum 13a mit einem Offset von 0 µs einen Impuls aus und empfängt anschließend, während Sensor 2 in demselben Sensoraktionszeitraum 13a mit einem Offset von 0 µs nur empfängt. Ebenso führen die Sensoren 4 bis 6 in Reaktion auf den Empfang des Synchronisations-Pulses 10 im Sensoraktionszeitraum 13b die folgenden, in der Aktionsliste der Figur 3 hinterlegten Aktionen aus: Während Sensor 5 mit einem Offset von 500 µs sendet und empfängt, empfangen die Sensoren 4 und 6 mit einem Offset von 500 µs die Echos des vom Sensor 5 gesendeten Impulses.

Figur 6 zeigt ein weiteres Zeitdiagramm, in welchem die in Figur 5 gezeigten Sensoraktionen in einem Aktionszeitraum 11 zusammengefasst sind. Wie in Zusammenhang mit Figur 5 beschrieben, folgt auf einen Synchronisations-Puls 10 ein Aktionszeitraum 11, in welchem die Sensoren diejenigen Aktionen (z.B. Senden bzw. Empfangen von Ultraschallpulsen) durchführen, welche ihnen beispielsweise durch einen im Synchronisations-Puls enthaltenen Aktionsindex vorgegeben worden sind. An den Aktionszeitraum 11 schließen sich Zeitschlitze 1 und 2 an, in welchen die Sensoren, welche eine Aktion durchgeführt haben, eine entsprechende Botschaft über den Bus senden können. Im Beispiel sendet in Zeitschlitz 1 Sensor 1 eine Sensorbotschaft 12a und in Zeitschlitz 2 Sensor 6 eine Sensorbotschaft 12b. Eine solche zeitliche Abfolge ergibt sich für den Aktionsindex 1 der in Figur 3 gezeigten Aktionsliste, wenn der Sensor 6 den Zeitpunkt zum Senden seiner Botschaft über den Bus dynamisch aus der Aktionsliste ableitet, mit anderen Worten erkennt, dass nach der von Sensor 1 gesendeten Botschaft kein weiterer Sensor eine Botschaft über den Bus zu senden hat, bis er selbst an der Reihe ist. Entsprechend kann Zeit gespart werden, indem sich Sensor 6 direkt im Anschluss an Sensor 1 über den Bus beim Steuergerät meldet.

Durch die vorgenannten Aspekte und Funktionen der vorliegenden Erfindung wird es möglich, einzelne Sensoren zum Durchführen von vordefinierten Aktionen und Senden der dabei entstandenen Botschaften wahlfrei anzusteuern. Es kann bei geringerem Aufwand eine höhere Auflösung bei der Messung und Auswertung von Signalen einer vorgegebenen Sensorik erzielt werden. Der Hardwareaufwand verringert sich und Systemkosten sowie Gewicht werden eingespart. Hierzu greifen verschiedene Vorschläge und Ansätze der vorliegenden Erfindung ineinander, um den größtmöglichen Effekt zu erzielen, können jedoch selbstverständlich auch einzeln und weitgehend unabhängig voneinander in Sensorsystemen eingesetzt werden. In diesem Rahmen sind dem Fachmann zahlreiche Modifikationen des vorbeschriebenen Systems anheim gestellt, welche sich im Schutzbereich der vorliegenden Erfindung befinden, wie er allein durch die beigefügten Ansprüche definiert wird.

## Patentansprüche

1. Sensorsystem umfassend
- einen Bus (3); und
- mindestens einen ersten Sensor (2) mit einem Zeitmessmittel (7), wobei der erste Sensor (2) über den Bus (3) mit weiteren Sensoren (2) verbunden und eingerichtet ist, einen über den Bus (3) empfangenen Steuerpuls für das Messen eines Zeitintervalls mittels der Zeitmessmittel (7) zu verwenden, **dadurch gekennzeichnet, dass** die Zeitmessmittel (7) ein RC-Glied umfassen.

2. System nach Anspruch 1, wobei das System, insbesondere jeweils jeder Sensor (2), eingerichtet ist, mittels des Steuerpulses einen Korrekturfaktor für die Zeitmessmittel (7) zu ermitteln.

3. System nach einem der Ansprüche 1 oder 2, wobei der Sensor (2) weiter Speichermittel (6) umfasst und eingerichtet ist, eine über den Bus (3) gesendete Dateneinheit zum Ausführen vordefinierter Aktionen in den Speichermitteln (6) zu speichern; und
im Ansprechen auf ein jeweiliges vorbestimmtes Bus-Signal eine jeweilige Aktion (TX, RX, 0) durchzuführen, wobei das Bus-Signal den Steuerpuls umfasst.

4. System nach Anspruch 3, wobei die vordefinierten Aktionen (TX, RX, 0) ein Senden und/oder ein Empfangen sensorspezifischer Signale umfassen und
insbesondere die Dateneinheit Informationen über einen Zeitpunkt der Ausführung der vordefinierten Aktionen (TX, RX, 0) relativ zu dem Empfangszeitpunkt des Steuerpulses enthält und/oder
die Aktion (TX, RX, 0) ein Senden eines ein Messsignal repräsentierenden Datenwertes über den Bus (3), insbesondere umfassend eine Sensor-Kennung (S1-S6), umfasst.

5. System nach einem der Ansprüche 1 bis 4, wobei die Sensoren (2) jeweils eine Auswerteeinheit umfassen und/oder eingerichtet sind, Messsignale, insbesondere in digitaler Form, zu senden.

6. System nach einem der Ansprüche 1 bis 5, wobei der Bus (3) eingerichtet ist, die Spannungsversorgung der Sensoren (2) und die Datenübertragung über dieselbe Leitung, insbesondere nach dem PSI5 Standard, durchzuführen.

7. System nach einem der Ansprüche 3 bis 6 weiter umfassend ein Steuergerät (4), welches eingerichtet ist,
- Daten über die in den Speichermitteln (6) des Sensors (2) gespeicherten Aktionen (TX, RX, 0) bereitzuhalten,
- die Dateneinheit an die Speichermittel (6) des Sensors (2) zu senden, und
- die vorbestimmten Bus-Signale über den Bus (3) zu senden.

8. System nach einem der Ansprüche 1 bis 7, wobei die Sensoren (2) Entfernungssensoren sind, welche eingerichtet sind, aus dem Zeitintervall zwischen einem Sendezeitpunkt und einem Empfangszeitpunkt eines Signals mittels der Zeitmessmittel (7) eine Entfernung von einem reflektierenden Objekt insbesondere zum Zwecke der Kollisionsüberwachung eines Fahrzeugs zu ermitteln.

9. Sensor mit
- Speichermitteln (6);
- Zeitmessmitteln (7) umfassend ein RC-Glied;
- Anschlüssen für die Integration in einen Bus (3); und insbesondere
- einer Auswerteeinheit,
welcher eingerichtet ist, in einem Sensorsystem (1) nach einem der Ansprüche 1 bis 8 verwendet zu werden.

## Claims

1. Sensor system comprising
- a bus (3); and
- at least one first sensor (2) having a timing means (7), wherein the first sensor (2) is connected to further sensors (2) via the bus (3) and is set up to use a control pulse received via the bus (3) to measure an interval of time using the timing means (7), **characterized in that** the timing means (7) comprise an RC element.

2. System according to Claim 1, wherein the system, in particular each sensor (2) in each case, is set up to determine a correction factor for the timing means (7) by means of the control pulse.

3. System according to either of Claims 1 and 2, wherein the sensor (2) also comprises storage means (6) and is set up to store a data unit transmitted via the bus (3) for performing predefined actions in the storage means (6); and
to perform a respective action (TX, RX, 0) in response to a respective predetermined bus signal, wherein the bus signal comprises the control pulse.

4. System according to Claim 3, wherein the predefined actions (TX, RX, 0) comprise transmission and/or reception of sensor-specific signals, and
the data unit, in particular, contains information relating to a time at which the predefined actions (TX, RX, 0) are performed relative to the reception time of the control pulse, and/or
the action (TX, RX, 0) comprises transmission of a data value representing a measurement signal via the bus (3), in particular comprising a sensor identifier (S1-S6).

5. System according to one of Claims 1 to 4, wherein the sensors (2) each comprise an evaluation unit and/or are set up to transmit measurement signals, in particular in digital form.

6. System according to one of Claims 1 to 5, wherein the bus (3) is set up to supply the voltage to the sensors (2) and to transmit the data via the same line, in particular according to the PSI5 standard.

7. System according to one of Claims 3 to 6, also comprising a control device (4) which is set up
- to hold data relating to the actions (TX, RX, 0) stored in the storage means (6) of the sensor (2),
- to transmit the data unit to the storage means (6) of the sensor (2), and
- to transmit the predetermined bus signals via the bus (3).

8. System according to one of Claims 1 to 7, wherein the sensors (2) are distance sensors which are set up to determine a distance from a reflective object from the interval of time between a transmission time and a reception time of a signal by means of the timing means (7), in particular for the purpose of monitoring a collision of a vehicle.

9. Sensor having
- storage means (6);
- timing means (7) comprising an RC element;
- connections for integration in a bus (3); and, in particular
- an evaluation unit,
which sensor is set up to be used in a sensor system (1) according to one of Claims 1 to 8.

## Revendications

1. Système de capteurs comprenant :
- un bus (3) ; et
- au moins un premier capteur (2) avec un moyen de mesure de temps (7), dans lequel le premier capteur (2) est en liaison via le bus (3) avec d'autres capteurs (2) et est étudié pour utiliser une impulsion de commande réceptionnée via le bus (3) pour la mesure d'un intervalle de temps au moyen des moyens de mesure de temps (7), **caractérisé en ce que** les moyens de mesure de temps (7) comprennent un circuit RC.

2. Système selon la revendication 1, dans lequel le système, en particulier respectivement chaque capteur (2), est étudié pour déterminer un facteur de correction pour les moyens de mesure de temps (7) au moyen de l'impulsion de commande.

3. Système selon l'une des revendications 1 ou 2, dans lequel le capteur (2) comprend en outre des moyens de stockage (6) et est étudié pour enregistrer une unité de données envoyée via le bus (3) pour exécuter des actions prédéfinies dans les moyens de stockage (6) ; et
en réponse à un signal de bus prédéfini respectif, exécuter une action (TX, RX, 0) respective, le signal de bus comprenant l'impulsion de commande.

4. Système selon la revendication 3, dans lequel les actions prédéfinies (TX, RX, 0) comprennent une émission et/ou une réception de signaux spécifiques au capteur et
en particulier l'unité de données comprend des informations sur un moment d'exécution des actions prédéfinies (TX, RX, 0) par rapport au moment de réception de l'impulsion de commande et/ou
l'action (TX, RX, 0) comprend une émission d'une valeur de donnée représentant un signal de mesure via le bus (3), comprenant en particulier un identificateur de capteur (S1-S6).

5. Système selon l'une des revendications 1 à 4, dans lequel les capteurs (2) comprennent respectivement une unité d'évaluation et/ou sont étudiés pour envoyer des signaux de mesure, en particulier sous forme numérique.

6. Système selon l'une des revendications 1 à 5, dans lequel le bus (3) est étudié pour réaliser l'alimentation en tension des capteurs (2) et la transmission de données via la même ligne, en particulier selon le standard PS15.

7. Système selon l'une des revendications 3 à 6 comprenant en outre un appareil de commande (4), lequel est étudié
- pour tenir à disposition des données sur les actions (TX, RX, 0) enregistrées dans les moyens de stockage (6) du capteur (2),
- pour envoyer l'unité de données aux moyens de stockage (6) du capteur (2), et
- pour envoyer les signaux de bus prédéterminés via le bus (3).

8. Système selon l'une des revendications 1 à 7, dans lequel les capteurs (2) sont des capteurs de distance qui sont étudiés pour déterminer, à partir de l'intervalle de temps entre un moment d'émission et un moment de réception d'un signal, au moyen des moyens de mesure de temps (7), une distance par rapport à un objet réfléchissant, en particulier pour les besoins de la surveillance de collision d'un véhicule.

9. Capteur avec
- des moyens de stockage (6) ;
- des moyens de mesure de temps (7) comprenant un circuit RC ;
- des connexions pour l'intégration dans un bus (3) ; et en particulier
- une unité d'évaluation, laquelle est étudiée pour être utilisée dans un système de capteurs (1) selon l'une des revendications 1 à 8.
